# FASCICULE DE BREVET EUROPEEN

(11) **EP 0 716 410 B1**
(45) Date de publication et mention de la délivrance du brevet: **13.02.2002**
(21) Numéro de dépôt: 95402649.8
(22) Date de dépôt: 23.11.1995
(51) Int. Cl.: G11B 5/127, G11B 5/17, G11B 5/31, G11B 5/49

(54) **Procédé de réalisation d'une tête magnétique d'enregistrement/lecture et tête d'enregistrement/lecture**
Herstellungsverfahren für Aufzeichnungs-/Wiedergabemagnetkopf und Aufzeichnungs-/Wiedergabekopf
Magnetic recording/reproducing head manufacturing process and recording/reproducing head

(30) Priorité: 29.11.1994 FR 9414289
(43) Date de publication de la demande: 12.06.1996
(73) Titulaire: Thales, 75008 Paris (FR); THOMSON multimedia, 92648 Boulogne Cédex (FR)
(72) Inventeur: Maurice, François, F-92402 Courbevoi Cedex (FR); Coutellier, Jean-Marc, F-92402 Courbevoi Cedex (FR); Pirot, François-Xavier, F-92402 Courbevoi Cedex (FR)
(74) Mandataire: Ruellan-Lemonnier, Brigitte

(56) Documents cités:
- EP-A- 0 032 230
- EP-A- 0 269 489
- EP-A- 0 406 052
- EP-A- 0 463 908
- WO-A-90/07772
- WO-A-92/14250
- DE-A- 1 952 402
- US-A- 3 564 522
- US-A- 3 672 043
- US-A- 4 477 853

## Description

L'invention concerne un procédé de réalisation d'une tête magnétique d'enregistrement/lecture. Elle est applicable notamment à la réalisation de têtes multipistes pour la lecture de tout types de supports tels que disques magnétiques, bandes magnétiques, cartes magnétiques dans tous domaines tels que magnétoscopes, périphériques informatiques, enregistreurs de données pour engins spatiaux, etc.

L'écriture et/ou la lecture d'un grand nombre de pistes très proches les unes des autres, par exemple de pistes disposées parallèlement sur une bande magnétique au pas de 10 µm, nécessite une tête magnétique possédant des têtes élémentaires compatibles avec une telle densité d'information.

La Demande de Brevet français n° 2 630 853 décrit l'organisation d'une tête matricielle adaptée à une telle application. Le Brevet français 2 648 940 décrit différents procédés de réalisation d'une telle tête.

Cependant, il se pose un problème d'intégration des bobinages des têtes magnétiques et de connexion de ces bobinages aux circuits de commande.

L'invention propose la réalisation d'une tête intégrée avec ses bobinages et l'intégration également des circuits de commande, ce qui élimine les inconvénients de l'art antérieur. Le composant résultant est potentiellement bon marché et offre une plus grande densité d'entrefers dans une organisation matricielle de têtes magnétiques.

Selon l'invention, la tête intégrée se présente sous la forme d'un composant regroupant de la logique de commande, des transistors de puissance, des bobinages multitours et des circuits magnétiques.

L'invention concerne donc un procédé de réalisation d'une tête magnétique d'enregistrement/lecture caractérisé en ce qu'il comporte les étapes suivantes :
- réalisation de fils d'excitation magnétique sur ou dans une première face d'un substrat comprenant cette première face et une deuxième face opposée à la première ;
- réalisation sur la première ou la deuxième face du substrat, d'au moins deux pôles magnétiques séparés par un entrefer ;
- perçage de trous à travers le substrat, à partir de la face opposée à celle portant les pôles magnétiques aboutissant chacun de telle façon qu'il y ait couplage magnétique entre le fond du trou et le pôle ;
- dépôt d'une couche en matériau bonne perméabilité magnétique dans les trous et dans des zones du substrat situées entre les trous.

Les différents objets et caractéristiques de l'invention apparaîtront plus clairement dans la description qui va suivre et dans les figures annexées qui représentent :
- la figure 1, un exemple général de réalisation selon l'invention ;
- la figure 2, un exemple détaillé d'une tête magnétique selon l'invention ;
- les figures 3a à 3e, un procédé de réalisation d'une tête magnétique selon l'invention ;
- les figures 4a à 4e, une variante du procédé de réalisation selon l'invention ;
- la figure 5, une tête magnétique et un procédé de réalisation selon lesquels des pôles magnétiques ne sont pas directement sur la plaque de substrat ;
- la figure 6, une variante de réalisation de la figure 5;
- la figure 7, une application de l'invention à la réalisation d'une tête magnétique matricielle ;
- les figures 8 à 14, différents modes de bobinages d'une tête magnétique matricielle.

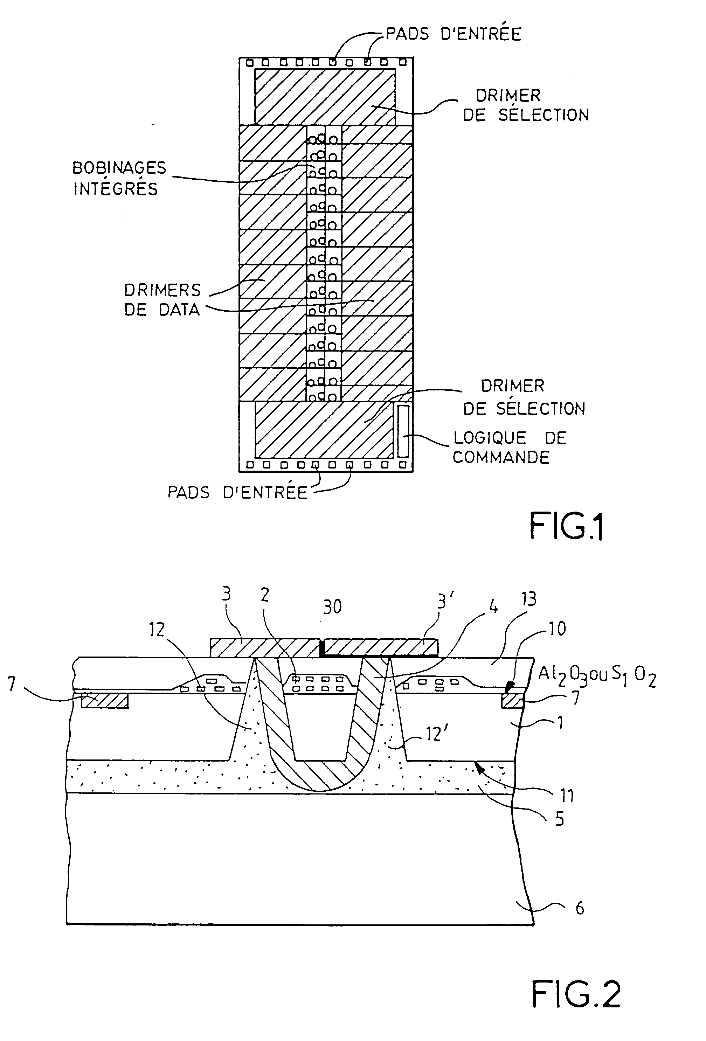

Selon l'invention, les circuits logiques de commande, les transistors d'alimentation et les bobinages sont réalisés sur un substrat en matériau semiconducteur (silicium) en utilisant une technologie aujourd'hui éprouvée et largement industrialisée telle que par exemple une technologie à transistors MOS complémentaires et double niveau de métallisation. La figure 1 schématise un tel circuit tel qu'on peut l'obtenir sur plaquette de l'industrie des semiconducteurs. On remarquera que les connexions sont disposées sur les bords haut et bas de la puce, de façon à libérer les bords droit et gauche pour le défilement de bande.

Les transistors de commande ont une résistance passante bien inférieure à celle des bobinages, de sorte que les courants sont déterminés par l'impédance desdits bobinages. Il s'ensuit que la zone de dissipation thermique est celle des bobinages.

La figure 2 est un exemple d'une vue schématique en coupe dans la zone des bobinages. On y voit un circuit magnétique avec entrefer imbriqué dans un bobinage.

Elle comporte un substrat 1 portant sur une de ses faces 10, des conducteurs d'excitation magnétique 2 ou fils de bobinage. Le substrat 1 est par exemple en matériau semiconducteur (silicium par exemple) et des circuits de commande 7, 7' sont implantés dans le substrat. Les circuits 7, 7' sont donc des circuits à semiconducteur et contiennent des circuits à transistors de puissance permettant d'alimenter en courant les fils de connexion. Ils sont alors connectés par des moyens connus dans la technique aux fils d'excitation 2. Les circuits 7, 7' peuvent contenir également des circuits logiques de commande recevant des ordres de l'extérieur et commandant les transistors d'alimentation de puissance des fils d'excitation.

Au-dessus des bobinages sont disposés des pôles magnétiques 3, 3' séparés par un entrefer 30. Une couche de matériau isolant 13 peut être prévue au-dessus des fils d'excitation 2. Cette couche dont la surface est plane ou légèrement courbe permet de recevoir aisément les pôles 3, 3' et de les isoler des fils d'excitation 2. Les pôles 3, 3' sont réalisés avantageusement selon des techniques de réalisation en couches minces telles que décrites dans le Brevet français n° 2 605 783.

Des trous 12 et 12' traversent le substrat 1 et la couche 13 et contiennent un matériau à bonne perméabilité magnétique 4, de telle façon que ce matériau est en contact ou quasiment en contact avec les pôles 3, 3' de façon à être couplé magnétiquement avec les pôles 3, 3'. La couche 4 couple donc magnétiquement les pôles 3 et 3' entre eux.

Enfin une plaque support 6 de préférence rigide est fixée sur la face 11 du substrat 1 avec par exemple de la colle 5. De manière avantageuse, la plaque 6 est bonne conductrice de la chaleur, en silicium par exemple pour permettre le refroidissement des circuits.

Selon l'exemple de réalisation de la figure 2, les fils d'excitation 2 et les circuits 7, 7' sont disposés sur la face 10 du substrat, mais selon une autre forme de réalisation, ils pourraient être sur la face 11.

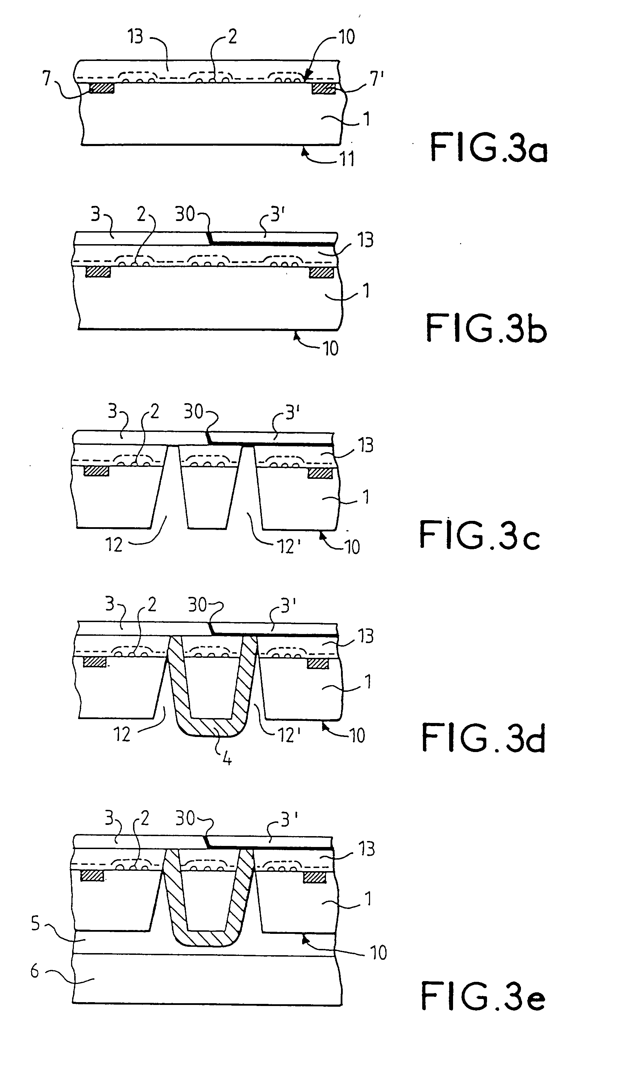

En se reportant aux figures 3a à 3e, on va maintenant décrire un procédé de réalisation d'une tête magnétique selon l'invention.

Au cours d'une première étape (figure 3a), on réalise à la surface 10 d'un substrat 1, des circuits de commande 7, 7' et des fils d'excitation 2. Dans le cas d'une réalisation à semiconducteurs, les circuits de commande 7, 7' sont implantés dans le substrat et les fils d'excitation 2 sont réalisés à la surface du substrat. Les fils d'excitation 2 sont connectés électriquement aux circuits de commande 7, 7'. La face 10 et les fils d'excitation sont recouverts d'une couche d'isolant 13. Cette couche est de préférence aplanie ou rendue légèrement courbe (dans le cas d'applications à la lecture de bandes magnétiques).

Au cours d'une deuxième étape des pôles magnétiques 3, 3' séparés par un entrefer sont réalisés sur la couche 13. Selon une technique de réalisation en couches minces. Le pôle magnétique 3 est réalisé sur la face 10 puis sur ce pôle et la face 10 est réalisée une couche de matériau amagnétique 30.

Cette couche amagnétique 30 est d'épaisseur plus faible que celle du pôle 3. Une couche de matériau magnétique destinée à réaliser le pôle 3 est ensuite réalisée sur l'ensemble. Puis cette couche magnétique et la couche amagnétique 30 sont usinées au-dessus du pôle 3 de façon à faire apparaître celui-ci. On obtient ainsi la structure de la figure 3b.

Selon l'exemple de réalisation de la figure 3b, la couche de matériau amagnétique 30 située entre le pôle 3' et la face 10 a été conservée mais selon un autre mode de réalisation elle pourrait être supprimée.

Au cours d'une troisième étape (figure 3c) des trous 12, 12' sont percés dans le substrat 1 à partir de la face 11. Le trou 12 atteint de préférence le pôle 3. Le trou 12' atteint la couche 30 ou le pôle 3'. Les trous 12 et 12' peuvent également être des trous qui ne débouchent pas du substrat 1 ou de la couche 13 ; il suffit alors qu'il puisse y avoir couplage magnétique entre les pôles 3, 3' et les trous 12, 12' respectivement.

Au cours d'une quatrième étape (figure 3d) un matériau à bonne perméabilité magnétique 4 est ensuite déposé dans les trous 12, 12' et sur la zone de substrat 1 située entre les trous. Ce matériau 4 a pour but de coupler magnétiquement les pôles 3 et 3' et de constituer la "culasse" du circuit magnétique de la tête magnétique.

Dans cet état la tête magnétique selon l'invention est réalisée.

Au cours d'une cinquième étape (figure 3e) on peut fixer la face 11 du substrat sur une plaque support 6 dont le rôle est de rigidifier l'ensemble ainsi que de servir éventuellement de refroidisseur.

A titre d'exemple, l'épaisseur du substrat 1 peut être d'une centaine de micromètres, celle du pôle 3 d'une dizaine de micromètres, celle de la couche amagnétique 30 est de quelques micromètres.

Les matériaux utilisés seront par exemple :
substrat = silicium
pôles 3, 3' = sendust (alliage de fer, d'étain et d'aluminium)
couche de matériau magnétique 4 = permalloy

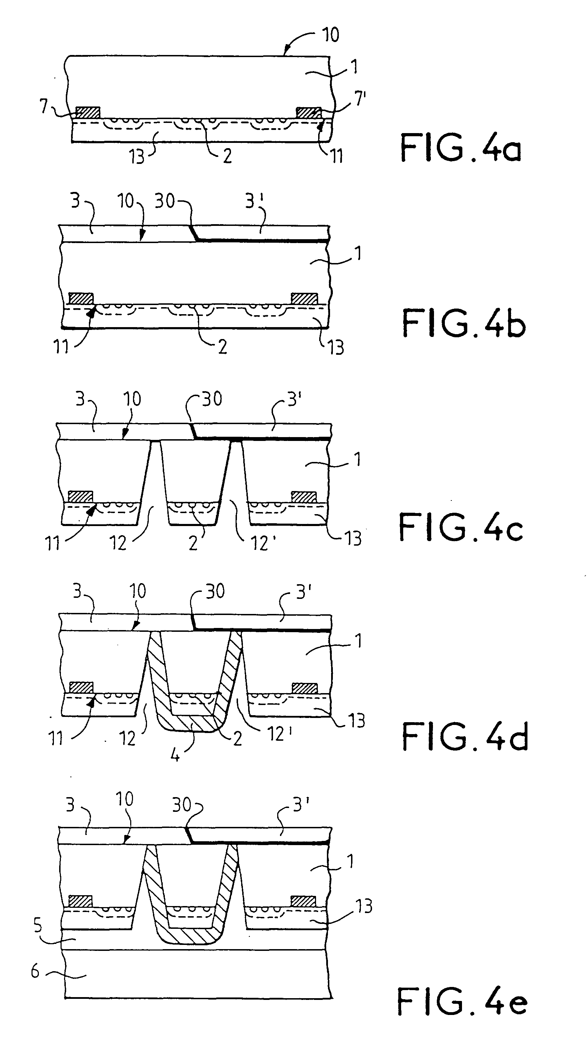

Les figures 4a à 4e représentent une variante de réalisation du procédé précédemment décrit.

Selon la figure 4a, au cours de la première étape, les fils d'excitation et les circuits 7, 7' sont réalisés sur la face 11 du substrat.

Au cours de la deuxième étape (figure 4b) les pôles magnétiques 3, 3' sont réalisés sur la face 10.

Les trous 12, 12' sont réalisés au cours de la troisième étape (figure 4c), comme précédemment. Puis le matériau magnétique 4 est déposé dans les trous 12, 12' comme précédemment (figure 4d). Enfin une pièce support 6 est accolée à l'ensemble.

On obtient ainsi une structure (figure 4e) qui diffère de celle de la figure 3e par le fait que les fils d'excitation et les circuits de commande 7, 7' sont réalisés sur la face 11 au lieu de la face 10.

La difficulté de ce type de technologie complètement intégrée est la compatibilité des traitements de la tête magnétique et des circuits silicium. On risque de détruire les transistors de logique et de commande au cours des recuits des pôles. Pour cette raison, nous décrirons une variante du procédé de réalisation :

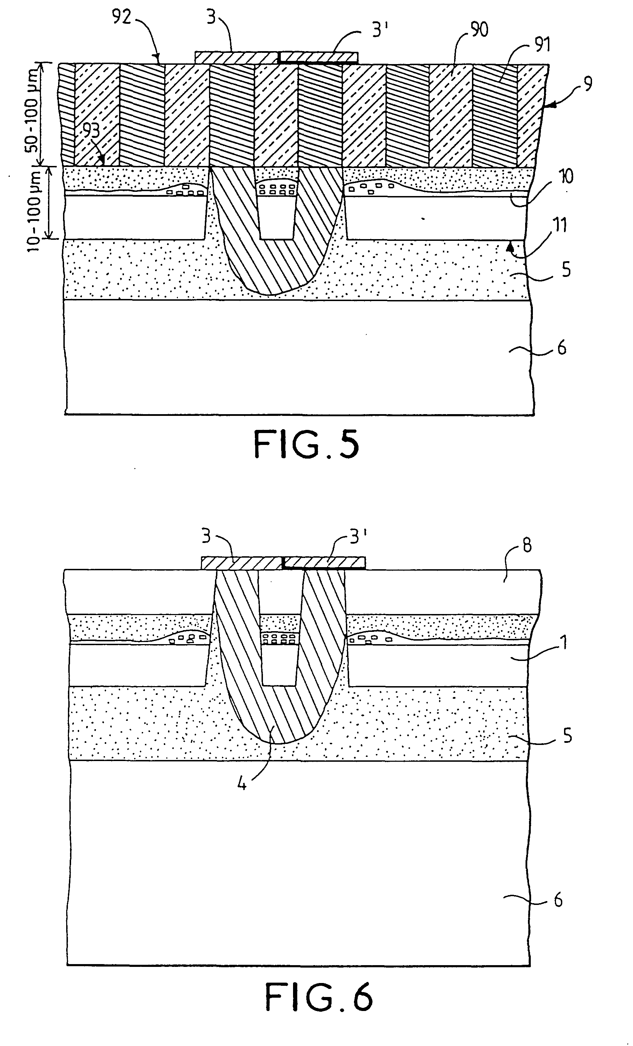

Cette variante est illustré en figure 5.

On réalise séparément une plaque composite 9 en matériau amagnétique 90 et matériau magnétique 91. Le matériau amagnétique 90 est, par exemple du verre et le matériau magnétique 91 du ferrite. Les pôles magnétiques 3, 3' sont réalisés sur une face 92 au-dessus de zones magnétiques 91 de façon à ce que chacun soit couplé magnétiquement à la face 93 de la plaque 9.

Au cours de la deuxième étape précédemment décrite cette face est ensuite fixée par collage par exemple sur la face 10 du substrat.

Le substrat 1 est ensuite aminci du côté de la face 11 puis des trous sont percés dans le substrat 1 avant électrodéposition de permalloy, comme précédemment. Un silicium ou conducteur thermique 6 peut alors être collé pour rigidifier l'ensemble.

D'autres variantes peuvent aboutir au résultat final. En particulier, le U en permalloy peut être réalisé sur les faces actives des puces (après avoir réalisé des trous borgnes par attaque chimique), puis on colle le conducteur thermique sur cette face active, on aminçi par la face arrière jusqu'au permalloy, et on colle l'ensemble sur le composite verre-ferrite.

Selon une autre variante représentée en figure 6, au lieu d'utiliser une plaque 9 en matériau composite, on utilise une plaquette 8 de matériau homogène et non magnétique tel que du silicium. On réalise sur cette plaquette les pôles magnétiques 3, 3'. Puis cette plaquette est amincie. Ensuite comme précédemment, cette plaquette 8 est accolée à la plaque de substrat 1 portant les fils d'excitation 2 et les circuits de commande. La plaque 1 est amincie. On pratique ensuite les trous 12 et 12' à travers le substrat 1 et à travers la plaquette 8.

Le matériau magnétique 4 déposé dans les trous 12, 12' permet de constituer le circuit magnétique couplant les deux pôles magnétiques 3 et 3'.

Différentes variantes de réalisation du circuit magnétique de fermeture sont possibles : le premier silicium peut être percé de ses trous borgnes (débouchant sur les pôles) avant collage du second. Ces mêmes trous borgnes peuvent être remplis de permalloy avant collage, ce qui nous ramène aux variantes exposées au paragraphe précédent.

Cette réalisation est avantageuse pour deux raisons :
- les deux substrats de silicium 1 et 8 peuvent avoir les mêmes dimensions ;
- la densité des entrefers peut être plus importante que dans la solution précédente car on ne fait plus appel au composite verre-ferrite.

Les bobinages peuvent être réalisés en deux niveaux de métallisation avec possibilité de connecter ces deux niveaux par des connexions transverses qui traversent le substrat 1 et voire même la plaque support 6.

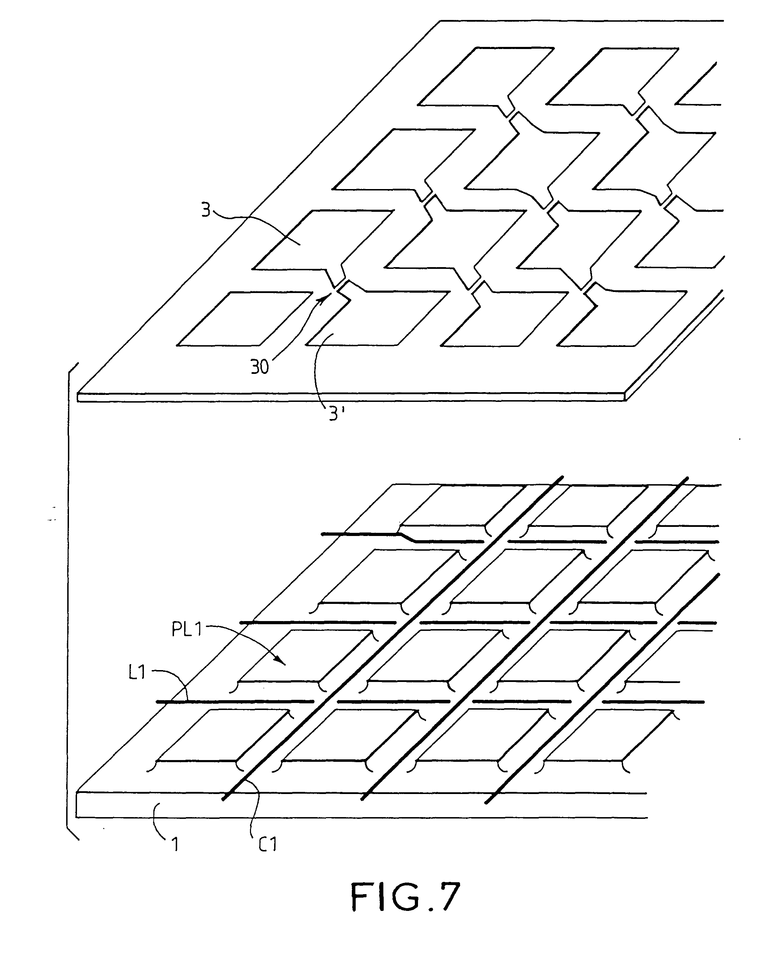

L'invention est applicable à la réalisation d'un ensemble de têtes matricielles telle que représentée en figure 7 et décrit dans la Demande de Brevet français n° 2 630 853.

Dans un tel ensemble de têtes, celles-ci sont organisées en lignes et colonnes. Une tête telle que T1 comporte deux pôles 3, 3' séparés par un entrefer 30 et situés chacun sur un plot magnétique PL1 relié à une couche ou une plaque en matériau magnétique 1. Des conducteurs d'excitation magnétique ou bobinages de ligne L1 permettent d'induire un flux magnétique dans les circuits magnétiques d'une ligne de têtes magnétiques. D'autres conducteurs d'excitation magnétique ou bobinages de colonne C1 permettent d'induire un flux magnétique dans les circuits magnétiques d'une colonne de têtes magnétiques. Une tête magnétique située au croisement d'un bobinage de ligne et d'un bobinage de colonne est excité.

Selon l'invention les conducteurs de bobinages ne sont pas logés dans des rainures. Ils sont à la surface du substrat 1. Le fonctionnement des têtes magnétiques est cependant le même. Leur mode de bobinage détermine les plots PL1.

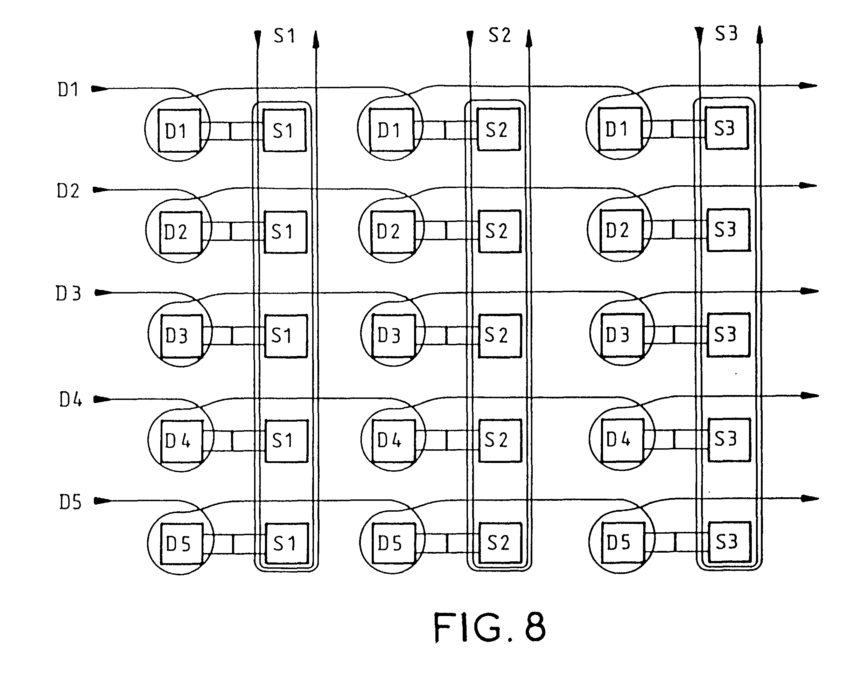

Les figures 8 à 14 représentent différents modes de bobinages rendus possibles par le procédé de l'invention.

La figure 8 représente une tête matricielle dans laquelle chaque tête magnétique possède ses deux pôles en propre. Par ligne de têtes magnétiques on a un bobinage de ligne, D1 par exemple qui bobine individuellement les pôles D1 d'une ligne. Par colonne de têtes magnétiques, on a un bobinage de colonne S1 qui bobine globalement les pôles D1 à D5 d'une colonne. Une telle disposition permet de réduire toute diaphonie entre têtes magnétiques en raison de l'absence de pôle commun entre têtes voisines. Un tel mode de bobinage permet également de réduire l'inductance.

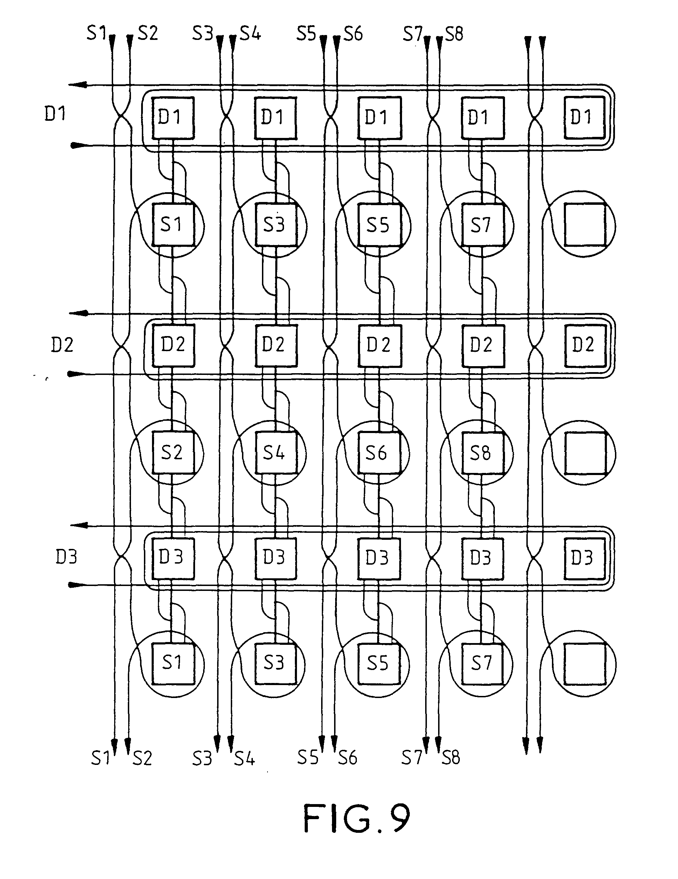

La figure 9 représente une tête matricielle dans laquelle un pôle magnétique est commun à deux têtes. Un bobinage de ligne D1 bobines les pôles d'une ligne. Pour chaque colonne, on a deux bobinages tels que S3 et S4 bobinant de façon alternée les pôles d'une colonne.

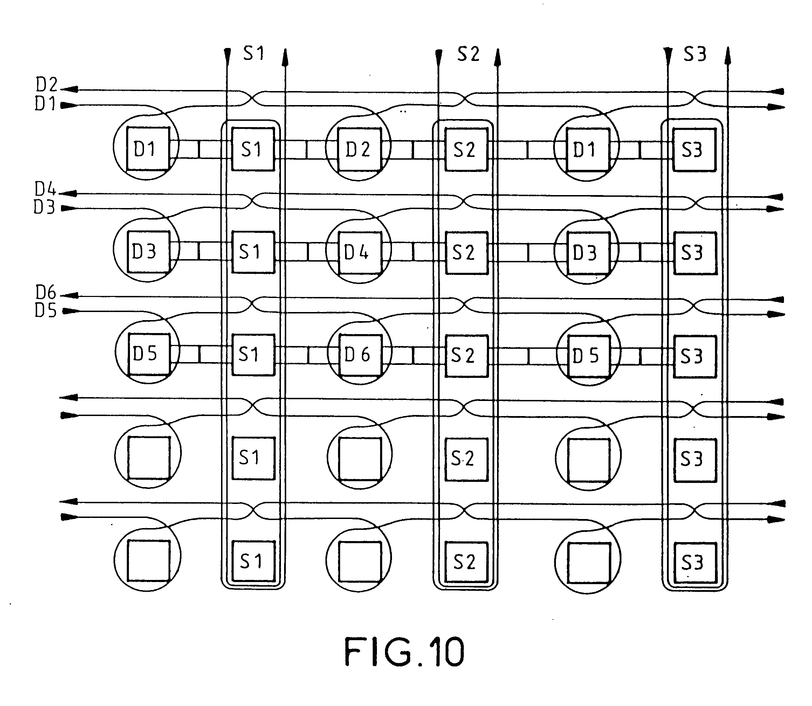

La figure 10 représente un mode de bobinage dans lequel ce sont les bobinages de colonnes qui sont commun chacun à une colonne de pôles et dans lequel on a deux bobinages de lignes bobinant de façon alternée les pôles d'une ligne.

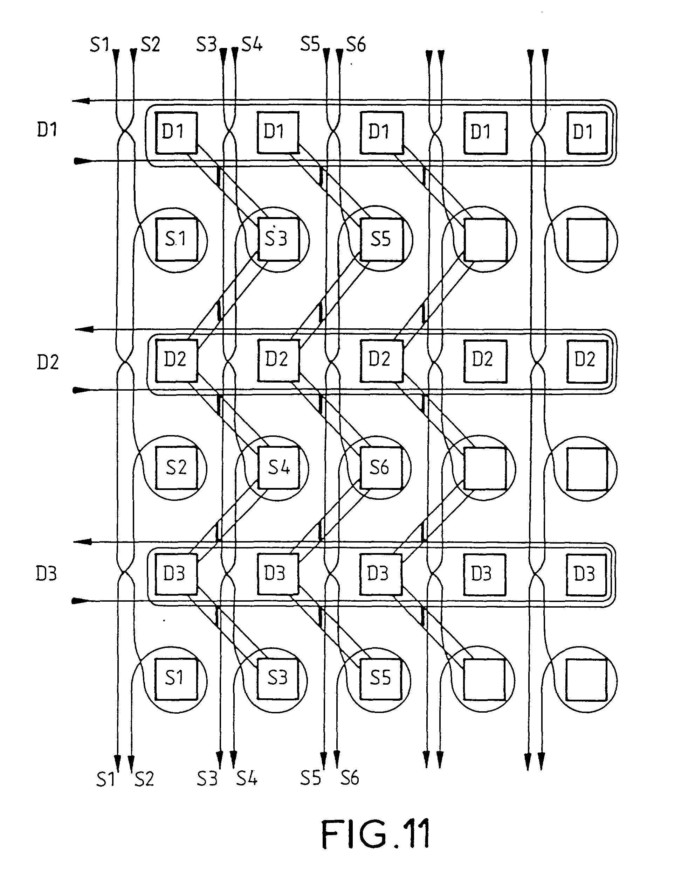

La figure 11 représente un mode de bobinage similaire à celui de la figure 9, mais les têtes magnétiques sont disposées en "zig-zag" et relient en diagonale les pôles magnétiques.

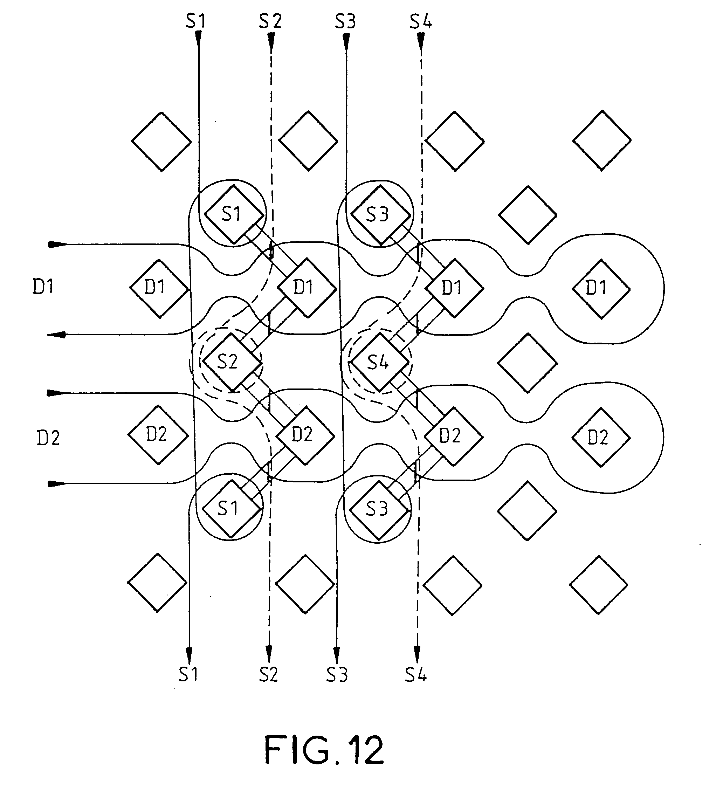

La figure 12 représente un mode de bobinage similaire à celui de la figure 11 mais dans lequel les plots et les pôles étant de forme carrée, ils sont disposés à 45° par rapport à la direction des lignes et colonnes.

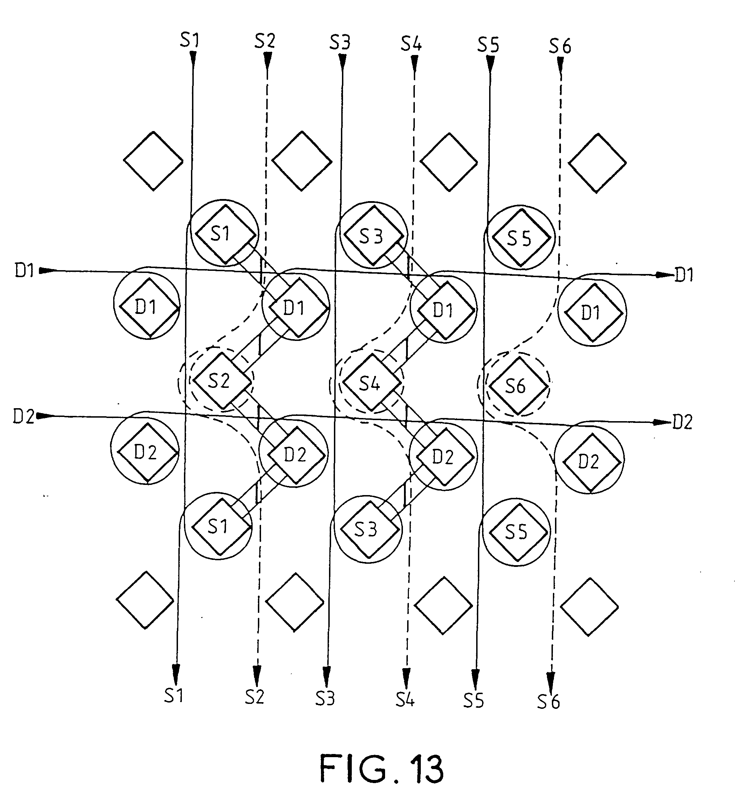

La figure 13 représente un mode de bobinage dans lequel les plots et pôles disposés à 45° (comme en figure 12) sont bobinés individuellement par des bobinages de lignes et des bobinages de colonne.

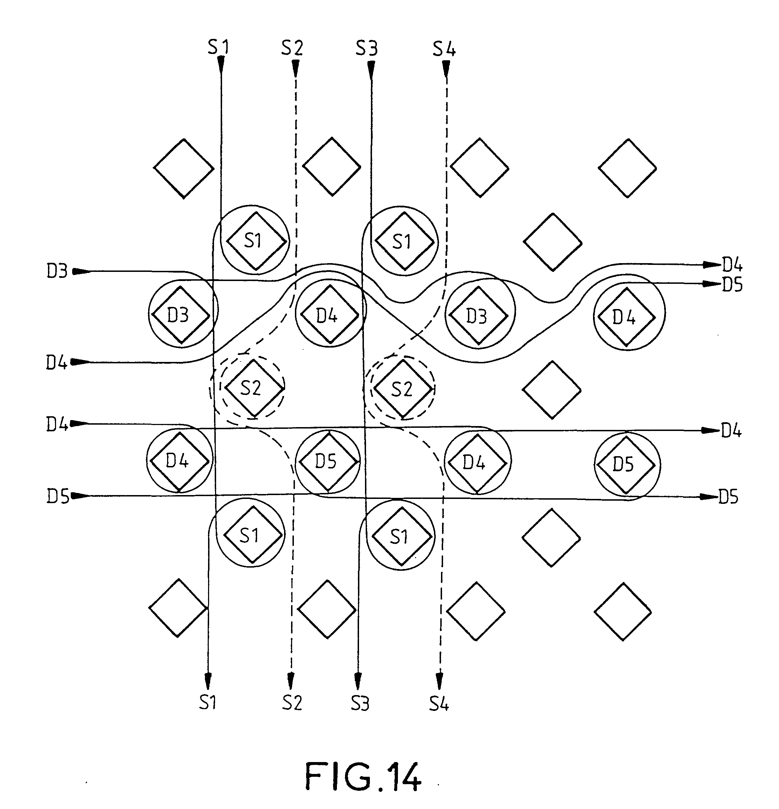

La figure 14 représente un mode de bobinage dans lequel on a deux bobinages par lignes D3, D4 par exemple, bobinant de façon alternée les pôles d'une ligne, ainsi que deux bobinages par colonne, S1 et S2 par exemple bobinant de façon alternée les pôles d'une colonne.

## Revendications

1. Procédé de réalisation d'une tête magnétique d'enregistrement/lecture **caractérisé en ce qu'**il comporte les étapes suivantes :
- - réalisation de fils d'excitation magnétique (2) sur ou dans une première face (10) d'un substrat (1) comprenant cette première face (10) et une deuxième face (11) opposée à la première ;
- réalisation sur la première ou la deuxième face du substrat, d'au moins deux pôles magnétiques (3, 3') séparés par un entrefer (30) ;
- perçage de trous (12) à travers le substrat, à partir de la face opposée à celle portant les pôles magnétiques aboutissant chacun de telle façon qu'il y ait couplage magnétique entre le fond du trou et le pôle;
- dépôt d'une couche (4) en matériau à bonne perméabilité magnétique dans les trous et dans des zones du substrat situées entre les trous.

2. Procédé selon la revendication 1, **caractérisé en ce qu'**il comporte une étape supplémentaire de collage de la face du substrat (1) opposée à celle portant les pôles magnétiques sur une plaque support.

3. Procédé selon la revendication 1, **caractérisé en ce que** la réalisation des pôles magnétiques se fait par:
- réalisation d'un premier pôle magnétique (3) sur la face du substrat ;
- réalisation d'une couche de matériau non magnétique (31), d'épaisseur inférieure à celle du premier pôle magnétique (3), sur le premier pôle et sur la face du substrat portant ce premier pôle;
- usinage de la couche de deuxième pôle et du matériau non magnétique situés sur le premier pôle.

4. Procédé selon la revendication 1, **caractérisé en ce que** des circuits électroniques de commande (7, 7') sont réalisés sur ou dans la première face de substrat.

5. Procédé selon la revendication 4, **caractérisé en ce que** le substrat (1) est en matériau semiconducteur et que les circuits électroniques (7, 7') sont implantés dans le substrat.

6. Procédé selon la revendication 1, **caractérisé en ce que** la couche (4) en matériau à bonne perméabilité magnétique est en permalloy.

7. Procédé selon la revendication 1, **caractérisé en ce que** la réalisation des pôles magnétiques (3, S) se fait séparément sur une plaque support (9) celle-ci étant ensuite fixée par sa face (93) opposée à celle portant les pôles, à la première ou à la deuxième face du substrat (1).

8. Procédé selon la revendication 7, **caractérisé en ce que** la plaque support (9) est en matériau amagnétique.

9. Procédé selon la revendication 7, **caractérisé en ce que** la plaque support (9) est en matériau composite d'éléments magnétiques et d'éléments non magnétiques perpendiculaires à ses faces principales (92, 93), les éléments magnétiques couplant magnétiquement chaque pôle à la face (93) opposée à celle qui porte ces pôles.

## Patentansprüche

1. Herstellungsverfahren für einen Aufzeichnungs/Lese-Magnetkopf, **gekennzeichnet durch** die folgenden Schritte:
- Ausbildung der Drähte (2) zur Erzeugung des Magnetfeldes auf oder in einer ersten Fläche (10) eines Substrates (1), das die erste Fläche (10) und eine der ersten Fläche gegenüberliegende zweite Fläche (11) enthält,
- Ausbildung von wenigstens zwei, **durch** einen Spalt (30) getrennten Magnetpolen (3, 3') auf der ersten oder auf der zweiten Fläche des Substrats,
- Bohren von Löchern (12) **durch** das Substrat von der der die Magnetpole tragenden Fläche gegenüberliegenden Fläche derart, daß eine magnetische Kopplung zwischen der Lochgrundfläche und dem Pol besteht,
- Aufbringung einer Schicht (4) aus einem Material mit einer hohen magnetischen Permeabilität in den Löchern und in den Bereichen des Substrates zwischen den Löchern.

2. Verfahren nach Anspruch 1, **gekennzeichnet durch** einen zusätzlichen Schritt zum Verkleben der Fläche des Substrates (1), die der die Magnetpole tragenden Fläche gegenüberliegt, auf einer Trägerplatte.

3. Verfahren nach Anspruch 1, **dadurch gekennzeichnet, daß** die Herstellung der Magnetpole durch folgende Schritte erfolgt:
- Ausbildung eines ersten Magnetpols (3) auf der Fläche des Substrats,
- Ausbildung einer Schicht aus einem nichtmagnetischem Material (31) mit einer Dicke kleiner als diejenige des ersten Magnetpols (3) auf dem ersten Pol und auf der Fläche des Substrates, die den ersten Pol trägt,
- Bearbeitung der Schicht des zweiten Pols und des nichtmagnetischen Materials auf dem ersten Pol.

4. Verfahren nach Anspruch 1, **dadurch gekennzeichnet, daß** die elektronischen Steuerschaltungen (7, 7') auf oder in der ersten Fläche des Substrats ausgebildet sind.

5. Verfahren nach Anspruch 4, **dadurch gekennzeichnet, daß** das Substrat (1) aus einem Halbleitermaterial besteht und daß die elektronischen Schaltungen (7, 7') in das Substrat eingebracht sind.

6. Verfahren nach Anspruch 1, **dadurch gekennzeichnet, daß** die Schicht (4) mit hoher magnetischer Permeabilität aus Permalloy besteht.

7. Verfahren nach Anspruch 1, **dadurch gekennzeichnet, daß** die Ausbildung der Magnetpole (3, 3') getrennt auf einer Trägerplatte (9), die danach auf der der die Pole tragenden Fläche gegenüberliegenden Fläche (93) befestigt wird, bei der ersten oder der zweiten Fläche des Substrats (1) erfolgt.

8. Verfahren nach Anspruch 7, **dadurch gekennzeichnet, daß** die Trägerplatte (9) aus einem nichtmagnetischem Material besteht.

9. Verfahren nach Anspruch 7, **dadurch gekennzeichnet, daß** die Trägerplatte (9) aus einem Verbundwerkstoff aus magnetischen Elementen und nichtmagnetischen Elementen besteht, die senkrecht zu ihren Hauptflächen (93) liegen, und die magnetischen Elemente jeden Pol auf der gegenüberliegenden Fläche (92, 93) mit der die Pole tragenden Fläche verbinden.

## Claims

1. Process for producing a magnetic read/write head, **characterized in that** it comprises the following steps:
- formation of magnetic excitation wires (2) on or in a first face (10) of a substrate (1) having this first face (10) and a second face (11) opposite the first;
- formation, on the first or the second face of the substrate, of at least two magnetic poles (3, 3') separated by a gap (30);
- drilling of holes (12) through the substrate, from the opposite face to that with the magnetic poles, each hole ending in such a way that there is magnetic coupling between the bottom of the hole and the pole;
- deposition of a layer (4) of material having good magnetic permeability in the holes and in the regions of the substrate which lie between the holes.

2. Process according to Claim 1, **characterized in that** it includes an additional step of adhesively bonding to a support plate that face of the substrate (1) which is on the opposite side to that with magnetic poles.

3. Process according to Claim 1, **characterized in that** the formation of the magnetic poles is carried out by:
- forming a first magnetic pole (3) on the face of the substrate;
- forming a layer of non-magnetic material (31), having a thickness of less than that of the first magnetic pole (3), on the first pole and on that face of the substrate which has this first pole;
- machining the second-pole layer and the non-magnetic material which are located above the first pole.

4. Process according to Claim 1, **characterized in that** electronic drive circuits (7, 7') are formed on or in the first substrate face.

5. Process according to Claim 4, **characterized in that** the substrate (1) is made of a semiconductor material and **in that** the electronic circuits (7, 7') are embedded in the substrate.

6. Process according to Claim 1, **characterized in that** the layer (4) of material having good magnetic permeability is made of permalloy.

7. Process according to Claim 1, **characterized in that** the magnetic poles (3, S) are formed separately on a support plate (9), the latter then being fastened to the first or to the second face of the substrate (1) via its opposite face (93) to that with the poles.

8. Process according to Claim 7, **characterized in that** the support plate (9) is made of non-magnetic material.

9. Process according to Claim 7, **characterized in that** the support plate (9) is made of a composite material comprising magnetic elements and non-magnetic elements which are perpendicular to its main faces (92, 93), the magnetic elements magnetically coupling each pole to the opposite face (93) to that with these poles.
